# EUROPEAN PATENT APPLICATION

(11) **EP 2 631 421 A1**
(43) Date of publication of application: **28.08.2013**
(21) Application number: 12156504.8
(22) Date of filing: 22.02.2012
(51) Int. Cl.: E21B 36/00, F16L 53/00, E21B 36/04

(54) **Heated crude oil pipeline**

(71) Applicant: Quantum Technologie GmbH, 82152 Krailling (DE)
(72) Inventor: Chan, Ki, 54/F Hong Kong (CN); Qu, Yuzhi, 54/F Hong Kong (CN)
(74) Representative: Jöstingmeier, Martin

(57) **Abstract**

An oil pipeline (10), comprising at least a duct (12) for transportation of crude oil with a lateral area, at least one compartment (22) being attached to the lateral area of the duct (12) and longitudinally extending parallel to the pipeline (10) and at least one electrical heater element (30) being inserted into the at least one compartment (22) can be efficiently heated to avoid solidification of the oil or components thereof even. The compartment (22) may contain a composition of inorganic compounds and possibly pure elemental species.

## Description

### Field of the invention

The invention relates to a pipeline with a duct for transportation of for example crude oil and with means for electrically heating the pipeline.

### Description of the related art

Pipeline transport is the transportation or moving of material through a pipe. Generally, the material involves liquids and gases. Examples include oil, natural gas, biofuels, plastics, water, beverages (e.g., milk) and pharmaceuticals. Such transport may be confined to a processing and manufacturing facility or may extend distances, for example, from a production facility or a manufacturing facility to a distribution facility. Thus, pipelines may extend several feet to several hundreds of miles.

One concern in pipeline transport is the temperature of the material being transported. Pipeline heating is a common requirement in many industrial processes, including petroleum, plastics, chemicals, pharmaceuticals, power generation and food processing. Pipeline heating also extends to the transport of materials from a production or processing facility to a point of view for further processing.

Crude oil recovered by an extraction well is pumped above ground and transported by pipelines to an on- or offshore station for further processing the crude oil. The pipelines have a typical diameter between about 6" (about 152 mm) and about 12" (about 305mm). Crude oil leaves the extraction well with about typically 125-175°C. At these temperatures the crude oil is fluid and can be pumped. However, above ground the pipeline is exposed to temperature of only a few degrees Celsius, for example about 5°C for pipelines at low sea floor levels. Onshore pipelines in Canada, Alaska or Sibiria are exposed to even lower temperatures (about -40°C). At these low temperatures the viscosity of the crude oil raises and some components of the crude oil like paraffin or methane hydrate tend to solidify and to attach thereby to the pipeline, reducing its free diameter until the pipeline is blocked.

Different pipeline heatings have been proposed. For example, the pipeline may be heated by applying a current through the pipeline (resistivity heating) like suggested in US-Patent 6,509,557 or by attaching electrical heating pads to the pipeline. Alternatively, the pipeline may have two concentric ducts. The inner duct is for the crude oil and the outer duct is for some heated liquid like hot water, steam or the like. DE 10 2008 056 257 discloses an inductive pipeline heating.

The invention is described with respect to an oil pipeline for crude oil. But of course can the invention be used for heating any fluid being subjected to pipeline transportation, like milk, chocolate, hot water, biofuels, plastics, beverages and the like. This means the term oil pipeline is to be understood as synonym for any pipeline.

### Summary of the invention

The problem to be solved by the invention is to provide an efficient and simple heating for a oil pipeline.

Solutions of the problem are described in the independent claims. The dependent claims relate to further improvements of the invention.

The pipeline comprises at least, a duct for transportation of crude oil with a lateral, preferably tubular area, at least one compartment being attached to the lateral area of the duct and longitudinally extending parallel to the pipeline and at least one heating element within the at least one compartment. The heating element is preferably a heater cartridge. Manufacture of this pipeline is simple due to its simple structure. Furthermore, standard heater cartridges may be used for heating the pipeline. These cartridges are cheap and can be replaced easily in case of failure if they are inserted retractably. There may also or alternatively be at least one removable cover, behind which the cartridge is arranged. The compartement, being attached to the duct, reinforces the pipeline.

Preferably the at least one compartment contains a composition of inorganic compounds and possibly pure elemental species. Preferably these are attached to the walls of the compartment. Examples for such a composition are described in the patents US 6,132,823, US 6,911,231, US 6916,430, US 6811720 and the application US2005/0056807, which are incorporated by reference as if fully disclosed herein. Such composition acts as a thermally conductive material or medium to provide at least an almost perfect homogenous distribution of the heat provided by the heater cartridge. The compartment may as well be evacuated as suggested in the above references. Generally the compartment and the contents thereof acts as a heatpipe.

Preferably there may be a gap between the heater cartridge and the duct. This enhances the uniform heat distribution.

The pipeline preferably comprises a thermally isolating shell, to thereby reduce thermal losses.

In a preferred embodiment the pipeline has at least two compartments, being preferably attached symmetrically with respect to the center of the duct. For example, there may be two compartments at opposed areas of the lateral area of the duct. In each of the at least two compartments is at least one heater cartridge. This permits a better heat distribution.

The invention is described with respect to ducting crude oil while exposing to the pipeline to cold environmental conditions. Of course can any liquid that is to prevented from condensing to a fluid or to solid be ducted and heated by the pipeline.

### Description of Drawings

In the following the invention will be described by way of example, without limitation of the general inventive concept, on examples of embodiment with reference to the drawings.
Figure 1 shows a partially opened section of a pipeline.
Figure 2 shows a cross section through plane A-A as indicated in Fig. 1
Figure 3 shows a partially opened section of a pipeline.
Figure 4 shows a cross section through plane A-A as indicated in Fig. 3
Figure 5 shows a sected isometric view of further pipeline,
Figure 6 shows a section of the pipeline of Fig. 5.
Figure 7 shows detail VII of Fig. 6
Figure 8 shows a section along plane C-C in Fig.6

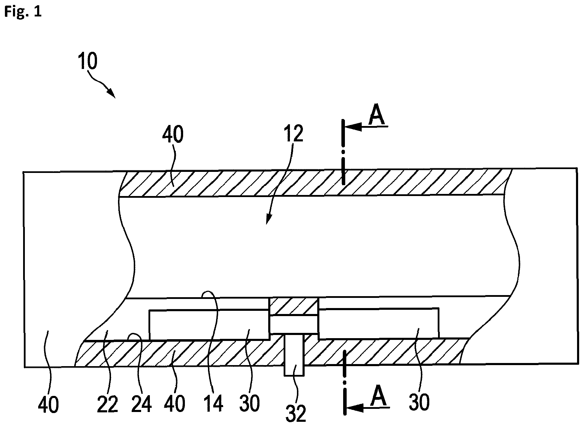

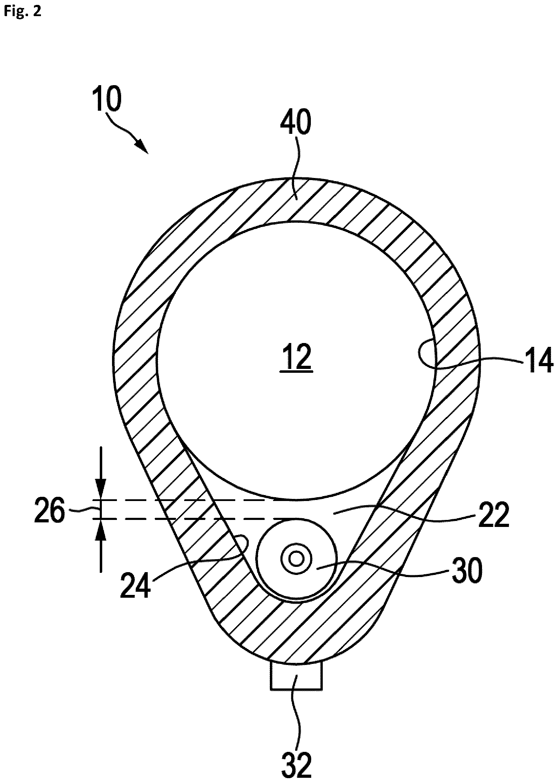

Figure 1 depicts a section of a pipeline 10 for crude oil transportation. The pipeline has a duct 12 or conduit 12 with duct wall 14. In this example the duct has a circular cross section, as can be seen from Fig. 2, showing the cross section through plane A-A. Of course, the invention is not bound to the circular cross section of the duct 12.

A compartment wall 24 is attached to the lateral area of the duct wall 14. The compartment wall 24 forms a compartment 22. The compartment 22 houses an electrical heater cartridge 30. A sleeve or socket for the electrical heater cartridge 30 may be part of the compartment 22, and thereby replacement of the heater cartridge simplified, as it is sufficient to retract the electrical heater cartridge 30 and to insert a new one. The proximal and/or distal end of the sleeve is preferably closed by a releasable end cap. The heater cartridge 30 has an at least approximately circular cross section and has a center axis being aligned parallel to the duct axis. The electrical heater cartridge 30 is preferably spaced from duct wall 14 and the compartment 22 contains a composition of inorganic compounds and possibly pure elemental species. Preferably these are attached to the walls of the compartment. Furthermore, the compartment may be evacuated. Examples for such a composition are described in the patents US 6,132,823, US 6,911,231, US 6916,430, US 6811720 and the application US2005/0056807, which are incorporated by reference as if fully disclosed herein. Such composition acts as a thermally conductive material or medium to provide at least an almost perfect homogenous distribution of the heat provided by the heater cartridge. As the heater cartridge 30 is spaced from the duct wall 14 - this means there is a gap 26 between the duct wall 14 and the heater cartridge 30 - the heat is conducted via the composition inside the compartment 12, yielding a homogenous heat distribution. An insulation shell 40 surrounds the lateral area of the duct walls and the compartment walls 24 and thereby reduces thermal losses. The electrical heater cartridges are provided with electrical power via cables 32, which connect the electrical heater cartridges 32 with a power station outside the insulation shell 40. The insulation shell could be e.g. made of some polyurethane foam, polystyrene foam or the like.

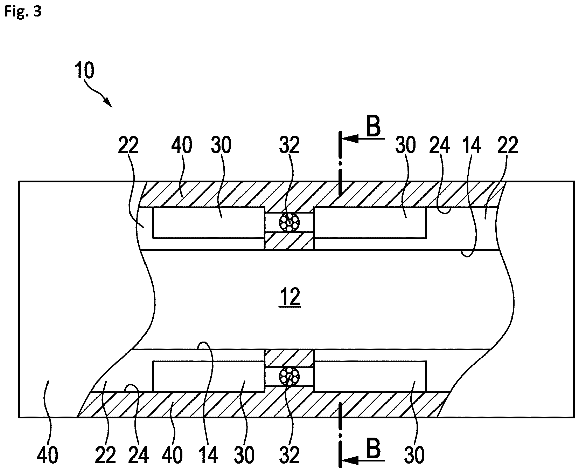

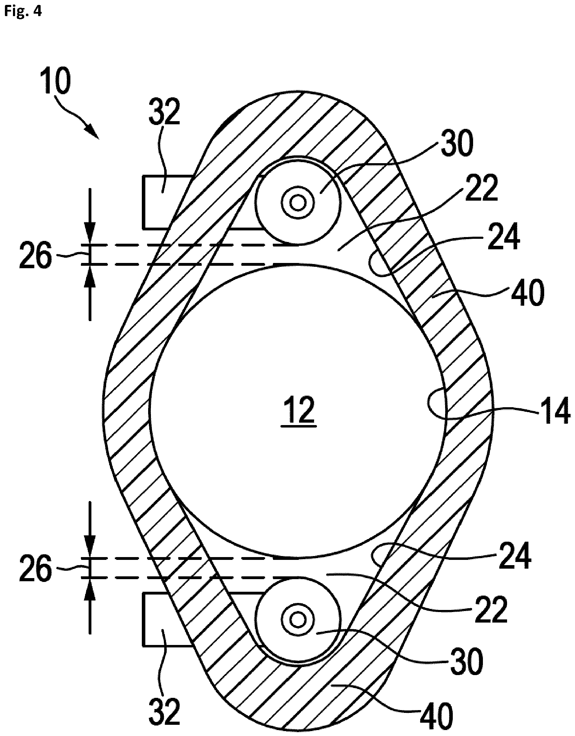

A similiar embodiment is hown in Fig. 3 and its the cross section through plane A-A as shown in Fig. 4.. A duct 12 is formed by duct walls 14. Compartment walls 24 are attached to the lateral surface of the duct wall 14 thereby forming two compartments 22 at opposite sides of the duct 12. Each compartment 22 houses an electrical heater cartridge 30 at distance to the duct wall 14, such that there is a gap 26 between duct wall 14 and the electrical heater cartridges 30. The compartments 22 contains a composition of inorganic compounds and possibly pure elemental species. Preferably these are attached to the walls of the compartment. Furthermore, the compartmant may be evacuated. Examples for such a composition are described in the patents US 6,132,823, US 6,911,231, US 6916,430, US 6811720 and the application US2005/0056807, which are incorporated by reference as if fully disclosed herein. Such compositions act as a thermally conductive material or medium to provide at least an almost perfect homogenous distribution of the heat provided by the heater cartridge. For the reduction of thermal losses an insulation shell 40 surrounds the composition of duct 12 and compartments 22 attached thereto. The electrical heater cartridges are provided with electrical power via cables 32, which connect the electrical heater cartridges 32 with a power station outside the insulation shell 40.

In the description above, for the purposes of explanation, numerous specific details have been set forth in order to provide a thorough understanding of the embodiments. It will be apparent however, to one skilled in the art, that one or more other embodiments may be practiced without some of these specific details. The particular embodiments described are not provided to limit the invention but to illustrate it. The scope of the invention is not to be determined by the specific examples provided above but only by the claims below. In other instances, well-known structures, devices, and operations have been shown in block diagram form or without detail in order to avoid obscuring the understanding of the description. Where considered appropriate, reference numerals or terminal portions of reference numerals have been repeated among the figures to indicate corresponding or analogous elements, which may optionally have similar characteristics.

It should also be appreciated that reference throughout this specification to "one embodiment", "an embodiment", "one or more embodiments", or "different embodiments", for example, means that a particular feature may be included in the practice of the invention. Similarly, it should be appreciated that in the description various features are sometimes grouped together in a single embodiment, figure, or description thereof for the purpose of streamlining the disclosure and aiding in the understanding of various inventive aspects. This method of disclosure, however, is not to be interpreted as reflecting an intention that the invention requires more features than are expressly recited in each claim. Rather, as the following claims reflect, inventive aspects may lie in less than all features of a single disclosed embodiment. Thus, the claims following the Detailed Description are hereby expressly incorporated into this Detailed Description, with each claim standing on its own as a separate embodiment of the invention.

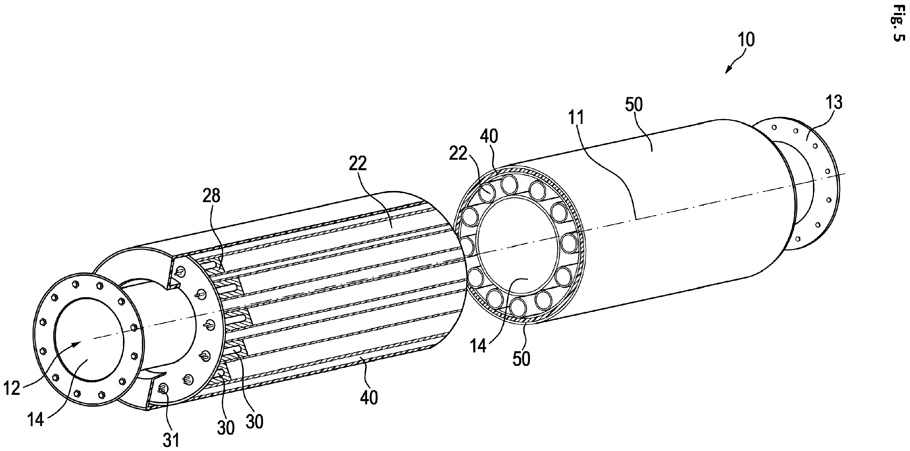

Figure 5 shows a partially transparent isometric view of a pipeline segment 10. The pipeline segment 10 has a duct 12, formed by a duct wall 14. The duct wall 14 forms at each of its distal ends a flange 13, for connecting the segment 10 to other segments. The segment 10 has a heating portion, being covered by a housing 50. Inside the housing 50 are compartements 22, being heated by heater cartridges 30 as explained in more detail below.

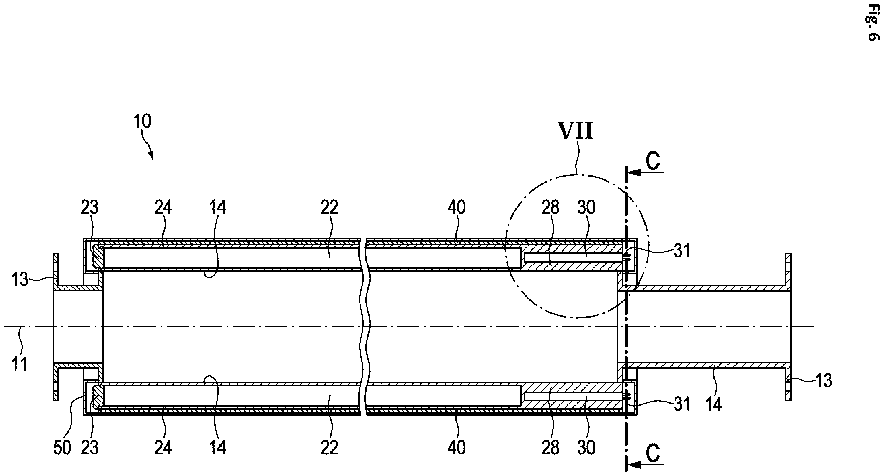

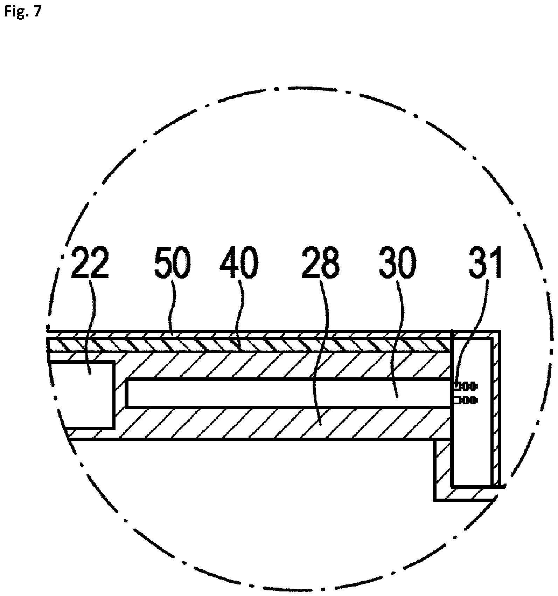

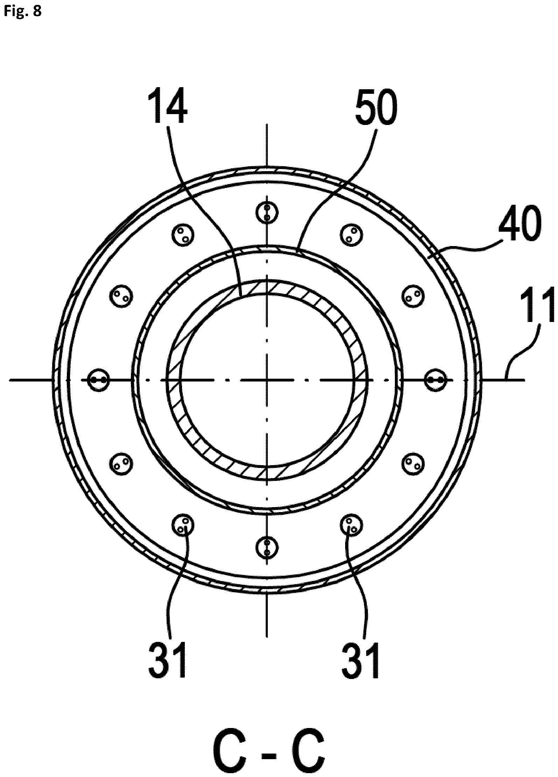

Figure 6 shows a longitudinal section of the segment 10 in Fig. 5. The pipeline has a duct 12 or conduit 12 for e.g. crude oil. The duct is defined by a duct wall 14.The duct 12 has heating section with a preferably step like extended diameter. On the peripheral surface of the heating section are compartments 22 which may be filled with a fluid containing for example inorganic salts. The compartments are formed between a compartment wall 24 and the duct wall 12. The compartments 22 may be at least approximately cylindrical recesses with cylinder axes, which are preferably parallel to the segment's axis. The distal ends of the compartments 22 are closed, one by an end cap 23, the other by a sleeve section 28. The sleeve section 28 has sleeve like distal openings (cf. Fig. 7), into which electrical heater cartridges 30 are inserted. The compartment wall 24 is surrounded by an insulation shell 40, which again is surrounded by a housing 50 (cf. Fig. 8).

Figure 7 shows a detail of the sleeve like section 28. The electrical heater cartridges like 30 can be connected via terminals 31 to a power supply.

Figure 8 shows a cross section along plane C-C as indicated in Fig. 6. The heater cartridges 30 are arranged symmetrically with respect to the segment's 10 longitudinal axis 11.

### List of reference numerals

- 10: pipeline / pipeline segment
- 11: longitudinal axis
- 12: duct
- 13: flange
- 14: duct wall
- 22: compartment
- 23: end cap
- 24: compartment wall
- 26: gap
- 28: sleeve section
- 30: heater cartridge / electrical heating element
- 31: terminal
- 32: electrical cable
- 40: insulating shell
- 50: housing

## Claims

1. A pipeline (10), comprising at least:
- a duct (12) for transportation of crude oil with a lateral area,
- at least one compartment (22) being attached to the lateral area of the duct (12) and longitudinally extending parallel to the pipeline axis,
- at least one heater cartridge (30) being inserted into the at least one compartment (22).

2. The pipeline (10) of claim 1
**characterized in that**
the at least one compartment (22) contains a composition of inorganic compounds and possibly pure elemental species.

3. The pipeline (10) of claim 2
**characterized in that**
the composition of inorganic compounds and possibly pure elemental species is attached to the walls of the compartment (22).

4. The pipeline (10) of one of the preceding claims
**characterized in that**
the compartment (22) is evacuated.

5. The pipeline (10) of any one of the preceding claims,
**characterized in that**
there is a gap 26 between the heater cartridge (30) and the duct (12).

6. The pipeline (10) of of any one of the preceding claims
**characterized in that**
the pipeline (10) comprises a thermally isolating shell (40).

7. The pipeline (10) of any one of the preceding claims,
**characterized in that**
the pipeline (10) comprises at least two compartments (22), being attached at opposed areas of the lateral area of the duct (12), wherein in each of the at least two compartments (22) at least one heater cartridge (30) is inserted.
